Europäisches Patentamt

European Patent Office

Office européen des brevets

(19)

(11) Veröffentlichungsnummer : **0 336 177 B1**

## (12) EUROPÄISCHE PATENTSCHRIFT

(45) Veröffentlichungstag der Patentschrift :
**13.05.92 Patentblatt 92/20**

(21) Anmeldenummer : **89104862.1**

(22) Anmeldetag : **18.03.89**

(51) Int. Cl.$^5$ : **B65G 1/04**

(54) Vorrichtung zur Aufnahme, Speicherung und Weiterverarbeitung von Druckprodukten.

(30) Priorität : **02.04.88 DE 3811287**

(43) Veröffentlichungstag der Anmeldung :
**11.10.89 Patentblatt 89/41**

(45) Bekanntmachung des Hinweises auf die
Patenterteilung :
**13.05.92 Patentblatt 92/20**

(84) Benannte Vertragsstaaten :
**CH DE FR GB IT LI SE**

(56) Entgegenhaltungen :
**AT-B- 365 537**
**DD-A- 150 183**
**DE-A- 2 113 202**
**DE-A- 2 215 252**
**DE-A- 3 615 880**
**US-A- 4 191 499**

(73) Patentinhaber : **M.A.N.-ROLAND**
**Druckmaschinen Aktiengesellschaft**
**Christian-Pless-Strasse 6-30**
**W-6050 Offenbach/Main (DE)**

(72) Erfinder : **Petersen, Godber**
**Zeppelinstrasse 22**
**W-8900 Augsburg 1 (DE)**

**Beschreibung**

Die Erfindung betrifft eine Vorrichtung zur Aufnahme, Speicherung und Weiterverarbeitung von Druckprodukten mit Transport- und Speichereinrichtungen.

Allgemein bekannt ist es, Transportvorrichtungen, beispielsweise Förderketten, Förderbänder oder fahrerlose Flurförderfahrzeuge für den Transport von Druckproduten einzusetzen. Dies bedeutete eine wiederholte Obergabe der Druckprodukte von einem Beförderungs-bzw. Bearbeitungsmittel zum anderen, wobei die Speicherung insbesondere von einer großen Anzahl von Druckprodukten Probleme hinsichtlich des Raumbedarfes und des Zugriffes mit sich brachte. Diese Probleme verstärkten sich noch dadurch, daß die herkömmlichen Transporteinrichtungen üblicherweise in horizontaler Ebene liefen. Außerdem sind die zur Beförderung der Druckprodukte im Schuppenstrom eingesetzten Förderketten bzw. Bänder in ihrer Länge begrenzt. Eine vollautomatische Verarbeitung mit derartigen allgemein bekannten Systemen ist somit nicht möglich bzw. nur schwer erreichbar.

Aufgabe der Erfindung ist es, eine Vorrichtung zur Aufnahme, Speicherung und Weiterverarbeitung von Druckprodukten zu schaffen, die den Einsatz eines vollautomatischen flexiblen Fördersystems ermöglicht, wobei die für die Weiterverarbeitung benötigte Grundfläche im Vergleich zu den bekannten Systemen wesentlich geringer ist,

Diese Aufgabe wird durch die Anwendung der Merkmale des kennzeichnenden Teils im Anspruch 1 gelöst und Weiterbildungen der Erfindung ergeben sich aus den Unteransprüchen und aus der Beschreibung in Verbindung mit den Zeichnungen. In diesen zeigen, jeweils vereinfacht bzw. schematisiert:

Fig. 1 eine Draufsicht auf die an bzw. neben einer Druckmaschine angeordnete erfindungsgemäße Vorrichtung zur Aufnahme, Transport und Speicherung von Druckprodukten,

Fig. 2 eine Seitenansicht einer Beladestation an einem Doppelfalzapparat,

Fig. 3 die Zu- und Abführung mit Druckprodukten zu beladenden Kassetten,

Fig. 4 einen Triebkopf und einen Wagen zur Aufnahme und zum Transport von Druckprodukten,

Fig. 5 eine vergrößerte Darstellung des Triebkopfes gemäß Fig. 4,

Fig. 6 eine Schnittdarstellung durch einem mit einer Kassette beladbaren Wagen,

Fig. 7 einen Schnitt entlang der Linie C-C des in Fig. 5 dargestellten Triebkopfes,

Fig. 8 in Voransicht den erfindungsgemäßen Speicher zur Aufnahme einer Vielzahl von Druckprodukten mittels Kassetten,

Fig. 9 eine Seitenansicht des Speichers gemäß Fig. 8,

Fig 10 und 11 eine in den Fig. 8 und 9 verwendete Fördereinrichtung für Kassetten in zwei Ansichten und

Fig. 12 und 13 eine vergrößerte Darstellung in zwei Ansichten der in Fig. 8 dargestellten Weiterverarbeitungsstation.

Fig. 14 ein System zur Speicherung von Zick-Zack-Trägerstrukturen

Fig. 15 bis 17 eine Möglichkeit der Ankuppelung von Zick-Zack-Trägersystemen

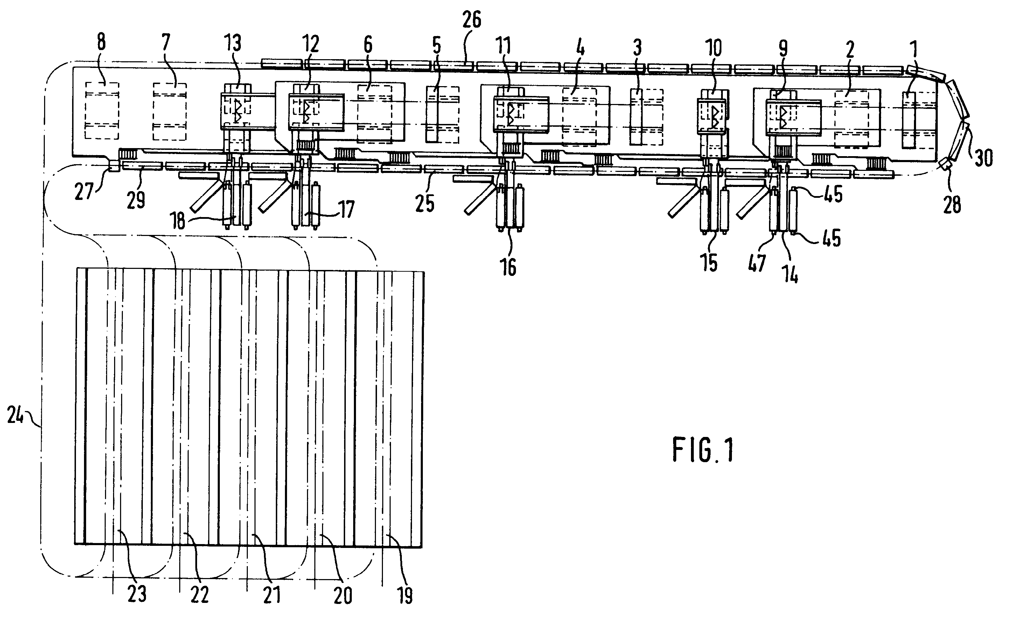

Fig. 1 zeigt die erfindungsgemäße Vorrichtung im Zusammenhang mit einer Druckmaschine, die die Druckeinheiten 1 bis 8 umfaßt. Jeder der Druckeinheiten 1 bis 8 ist ein Falzapparat, in dem hier beschriebenen Ausführungsbeispiel jeweils ein Doppelfalzapparat 9 bis 13 zugeordnet. Jedem Doppelfalzapparat 9 bis 13 ist jeweils eine der Beladestationen 14 bis 18 zugeordnet. Von diesen werden jeweils die Druckprodukte zu einer der Speicher- und Weiterverarbeitungsstationen 19 bis 23 geführt. Dafür sind entsprechende Transportbahnen vorzugsweise in verschiedenen Ebenen vorgesehen, von denen eine Transportbahn 24 in Fig. 1 angedeutet ist. Durch diese Transportbahnen werden die einzelnen Druckeinheiten 1 bis 8 bzw. die Doppelfalzapparate 9 bis 13 jeweils mit den Speicher- und Weiterverarbeitungsstationen 19 bis 23 verbunden. Auf jeder Transportbahn z.B. 24 werden vorzugsweise zwei Bahnen 25 und 26 bewegt, die jeweils einen Triebkopf 27 bzw. 28 und angekoppelte Wagen 29 bzw. 30 für jeden der Doppelfalzapparate 9 bis 13 umfassen.

Insgesamt werden also in dem hier beschriebenen Ausführungsbeispiel von der Druckmaschine bzw. deren Druckeinheiten 1 bis 8 über zehn Bahnen Druckprodukte zu den Weiterverarbeitungsstationen 19 bis 23 geführt.

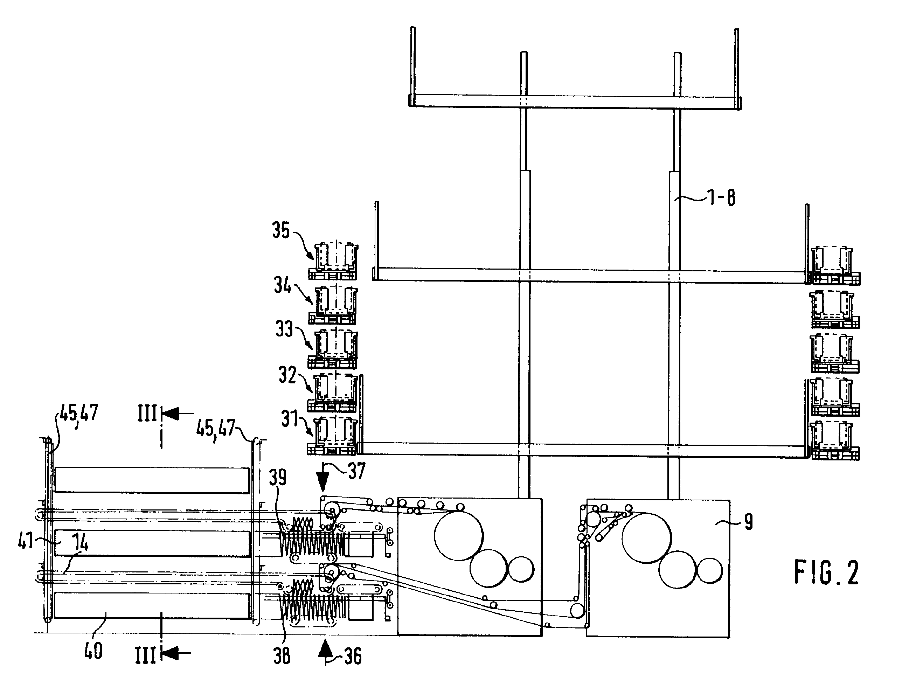

Wie aus Fig. 2 hervorgeht, arbeiten jeweils in den Transportebenen 31 bis 35 zwei Bahnen, die bei 25 und 26 in Fig. 1 für die Ebene 31 angedeutet sind. Über diese werden die aus dem Doppelfalzapparat 9 neuen kommenden Druckprodukte beispielsweise der Speicher- und Weiterverarbeitungsstation 23 zugeführt. Während eine Bahn, z.B. 25, wie in Fig. 1 angedeutet, beladen wird, kann die andere Bahn, beispielsweise die Bahn 26 im zugeordneten Speicherbereich, z.B. 23, entladen werden oder befindet sich im entladenen Zustand in der in Fig. 1 dargestellten Position in Wartestellung. Bei größeren Entfernungen zwischen der Druckmaschine und der Weiterverarbeitungsstation ist es zweckmäßig, mehr als zwei Bahnen einzusetzen.

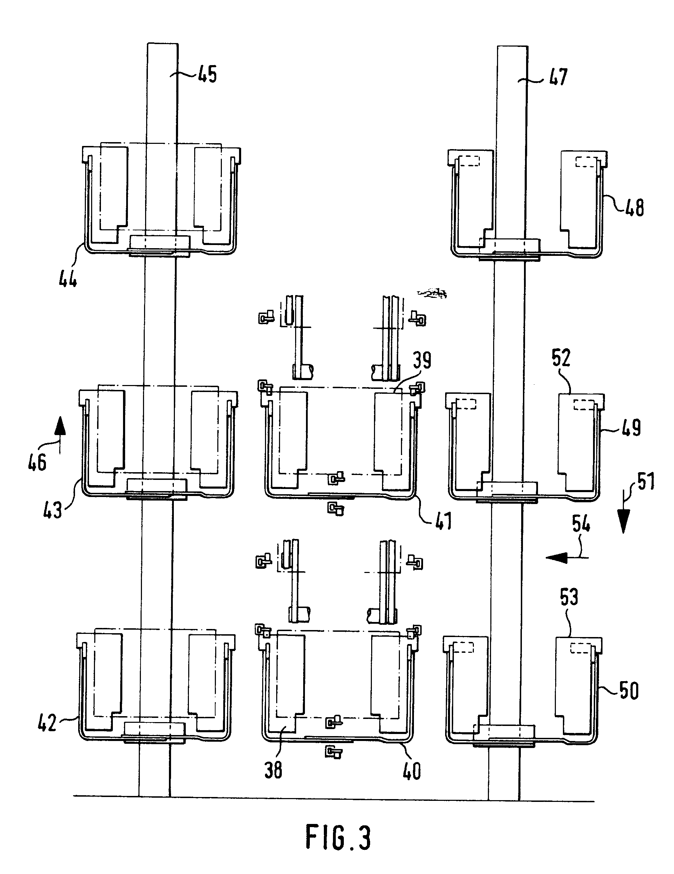

Aus Fig. 2 geht hervor, wie in Bereichen 36 und 37 zick-zackförmige, auseinander- und zusammenschiebbare Speicherstrukturen 38 und 39 mit aus dem Doppelfalzapparat 9 kommenden Falzprodukten beladen werden. Der Beladevorgang ist im einzelnen in den DE-A- 36 21 820, DE-A- 36 21 832 beschrieben und dargestellt. Gemäß Fig. 2 werden Kassetten 40 und 41 beladen. Fig. 3 zeigt in einer Schnittdarstellung entlang der Linie A-A der Fig. 2, wie volle Kassetten 42 bis 44 von Senkrechtförderern 45 in Richtung eines Pfeiles 46 nach oben befördert werden, während ein Förderer 47 leere Kassetten 48 bis 50 in Richtung eines Pfeiles 51 zuführt. Zum Beladen werden leere zick-zackförmige Speicherstrukturen 52 bzw. 53 den jeweiligen Kassetten entnommen und die Leerkassetten, beispielsweise 49 bzw. 50 in Richtung eines Pfeiles 54 befördert, um die Positionen der vollen Kassetten 40 bzw. 41 einzunehmen, die vorher in Richtung eines Pfeiles 54 auf die Position der Kassetten 42 bzw. 43 befördert worden sind. Wie aus Fig. 2 hervorgeht, werden durch die Förderer 45 bzw. 47 Kassetten auf die Ebene 31 angehoben bzw. aus dieser entnommen und abgesenkt. Die entsprechenden Förderer für die anderen Ebenen 32 bis 35 an den Beladestationen 15 bis 18 sind auf die jeweilige Förderhöhe verlängert und von den Förderebenen 31 bis 35 werden Kassetten von hier nicht näher dargestellten Vorrichtungen in Richtung der Transportebene geschwenkt, wie in Fig. 1 angedeutet ist, also etwa um 90°. Der Bahn, beispielsweise gemäß Fig. 1 der Transportbahn 24, wird also jeweils eine leere Kassette entnommen und dafür eine volle Kassette aufgeladen, wonach sie um eine Wagenlänge auf die nächste Position weiter vorrückt. Jede Bahn auf jeder Ebene wird über einen sogenannten Blockstellenbetrieb, wie er beispielsweise auch aus der Bahntechnik allgemein bekannt ist, unabhängig voneinander gesteuert. Dies ist möglich, wenn die einzelnen Schienenabschnitte aufgeteilt und voneinander isoliert sind, so daß diese unabhängig voneinander mit einem elektrischen Netz verbunden werden können. Im Rahmen der Erfindung können jedoch auch andere Steuerungstechniken, zum Beispiel mit unterschiedlichen Frequenzen, eingesetzt werden, um eine individuelle Steuerung zu ermöglichen, wobei eine Förderebene die andere nicht stören darf.

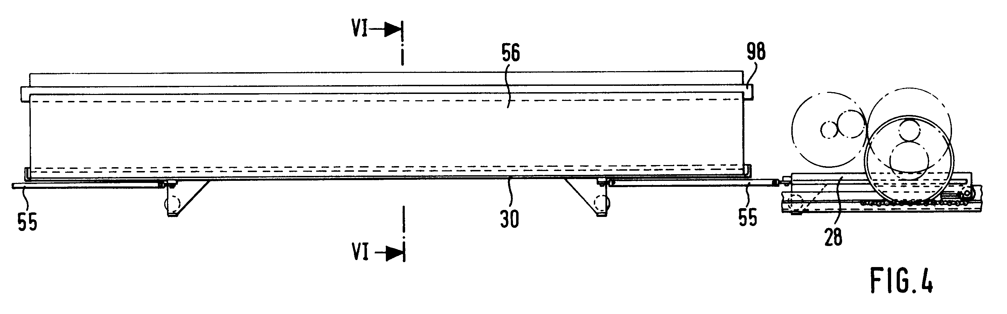

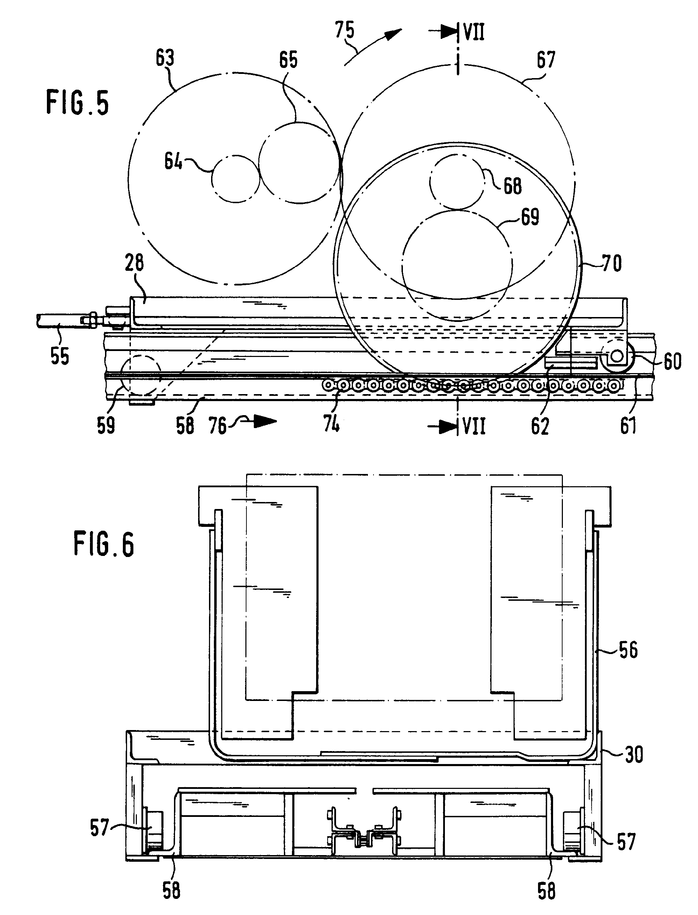

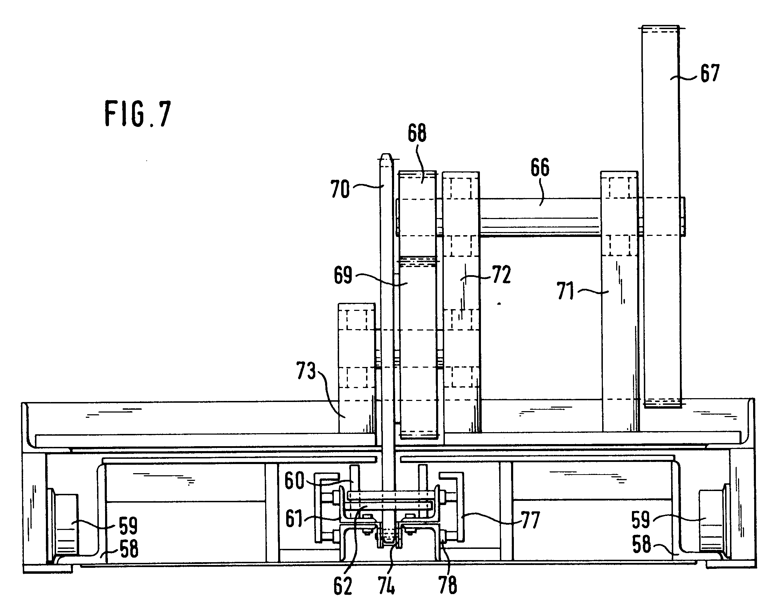

Die Fig. 4 bis 7 zeigen den Aufbau einer Transportbahn in verschiedenen Ansichten. Gemäß Fig. 4 ist ein Kassetten aufnehmender Wagen 30 über ein Gestänge 55 gelenkig mit einem Triebkopf 28 verbunden. Auf den Wagen 30 können volle oder leere Kassetten (beispielsweise 56) positioniert werden, die den Kassetten 48 bis 50 bzw. den Kassetten 42 bis 44 entsprechen können. Die Wagen 30 sind mit Rollen 57 versehen, die auf Schienen 58 laufen, wie in Fig. 6 dargestellt ist. Fig. 6 stellt einen Schnitt entlang der Linie B-B der Fig. 4 dar. Während Fig. 5 den Triebkopf 28 vergrößert zeigt. Fig. 7 hingegen zeigt einen Schnitt entlang der Linie C-C der Fig. 5. Der Triebkopf 28 läuft mit seinen Rollen 59 ebenfalls auf den Schienen 58 und mit seinen Rollen 60 auf Schienen 61. Dabei übernehmen Führungsrollen 62 die Seitenführung an den Schienen 61. Der Antrieb erfolgt in vorteilhafter Weise durch einen Elektromotor 63 über Ritzel 64, ein Rad 65 und über ein mit einer Welle 66 verbundenes Stirnrad 67. Von dem Stirnrad 67 aus verläuft der Antrieb des weiteren über ein Ritzel 68 zu einem Stirnrad 69, das wiederum fest mit einem Kettenrad 70 verbunden ist. Die Welle 66 und das Kettenrad 70 sind in Lagerböcken 71, 72 und 73 gelagert.

Das Kettenrad 70 greift in eine fest verlegte, mit den Schienen 61 verschraubte Rollenkette 74 ein und treibt mit einer Drehung in Richtung des Pfeiles 75 einen Triebkopf 27 bzw. 28 und damit jeweils zugeordnete Bahn in Richtung eines Pfeiles 76.

Die Stromabnahme für den Elektromotor 63 erfolgt über Stromabnehmer 77 von einer Schleifleitung 78. Zur Oberbrückung der einzelnen voneinander getrennten bzw, isolierten Schienenabschnitte kann beispielsweise der Stromabnehmer gabelförmig ausgebildet sein, so daß der Transport von einem Block, d.h. von einem Schienenabschnitt zu einem anderen möglich ist.

Durch diese Bauart kann die Bahn beliebige Entfernungen und Steigungen überwinden. Die Rollenette 74 ist vorzugsweise als sogenannte "Seitenbogenrollenkette" ausgebildet und kann somit auch in Radien, also gekrümmt, verlegt werden. Die Schleifleitung ist in voneinander isolierte Abschnitte unterteilt, in die jeweils getrennt elektrisch eingespeist wird. Wie vorangehend erwähnt wurde, ist somit eine Steuerung der Bahnen bzw. Züge unabhängig voneinander in den einzelnen Abschnitten möglich. Durch die komprimierte Aufnahme von Druckexemplaren in den Speicherstrukturen 38, 39, die in der DE-A- 36 21 820, eingehend beschrieben wurden, wird einerseits eine hohe Bahngeschwindigkeit und andererseits große Transportgeschwindigkeiten bzw. Transportleistungen ermöglicht und zwar auch über weite Entfernungen.

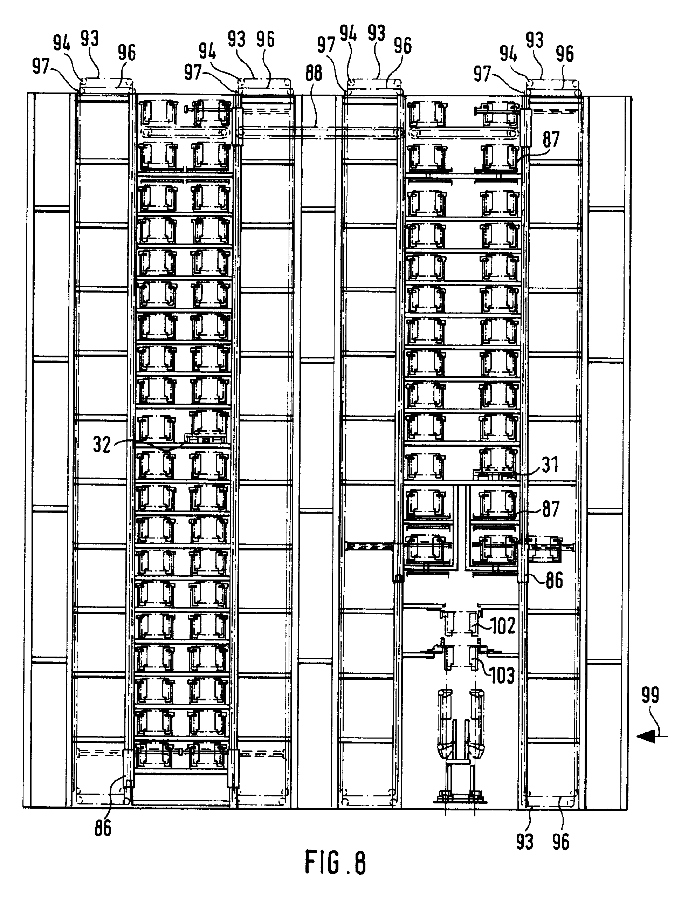

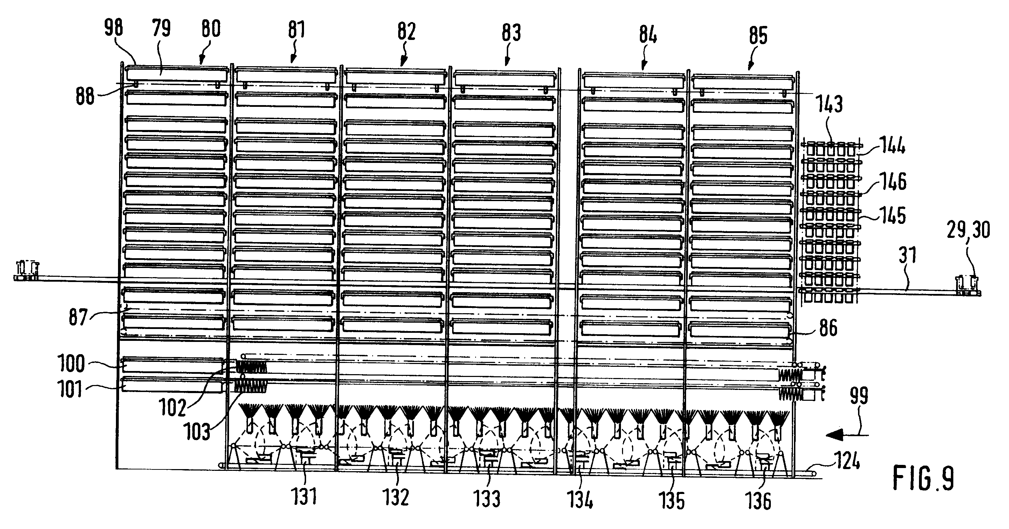

Die Fig. 8 und 9 zeigen in zwei Ansichten schematisch die erfindungsgemäßen Speicher- und Weiterverarbeitungsbereiche. In diesen Figuren ist beispielhaft die Bahnebene 31 angedeutet, über die die Bahnen 25 und 26 in die Speicher- und Weiterverarbeitungsbereiche an- und abfahren können. Des weiteren ist die Ebene 32 für die benachbarten Bahnen in Fig. 8 angedeutet. Beladene oder unbeladene, vorzugsweise codierte Kassetten 79 können somit auf vorzugsweise ebenfalls codierte Speicherplätze innerhalb von Feldern 80 bis 85 abgesetzt werden. Jedes der Felder 80 bis 85 nimmt jeweils auf einer Ebene stets ein Kassettenpaar auf, wie aus Fig. 8 hervorgeht. Dadurch ist es in vorteilhafter Weise möglich, jederzeit mit Hilfe von Fördereinrichtungen 86 auf jede Kassette zuzugreifen. Diese Fördereinrichtungen 86 sind ebenfalls für jedes der Felder 80 bis 85 paarweise vorhanden. Sie können voneinander unabhängig auf- und ab-, d.h. hoch- und runtergefahren werden (oder auch gleichzeitig) und dadurch in beliebiger Weise Kassetten aufnehmen oder absetzen. Werden alle gleichzeitig bewegt, kann eine Transportbahn, beispielsweise auf der Ebene 31 auf einmal durch alle Fördereinrichtungen, gemäß den Feldern 80 bis 85 (also sechs Fördereinrichtungen) gemeinsam ent- und beladen werden.

Volle Kassetten können somit auch für eine ganze Bahnlänge auf einmal auf Transportbänder 87 abgesetzt werden, die eine Verteilung in waagerechter Richtung durchführen können, d.h. jeweils in einer horizontalen Ebene eine Verschiebung zwischen den Feldern 80 bis 85 (Fig. 9). Selbstverständlich können auch Leerkassetten für eine Bahnlänge auf diesen Transportbändern bereitgestellt werden und dann auf einmal auf eine Bahn aufgeladen werden.

Durch einen in Fig. 8 angedeuteten Bandförderer 88 ist auch ein Austausch von Kassetten zwischen den jeweils paarweise angeordneten Stapeln (Fig. 8) möglich.

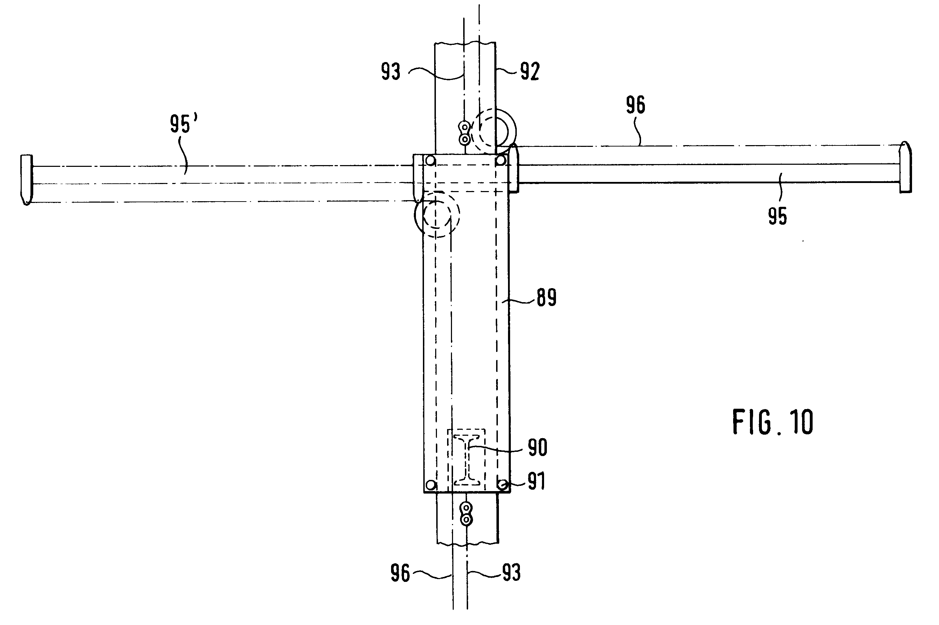

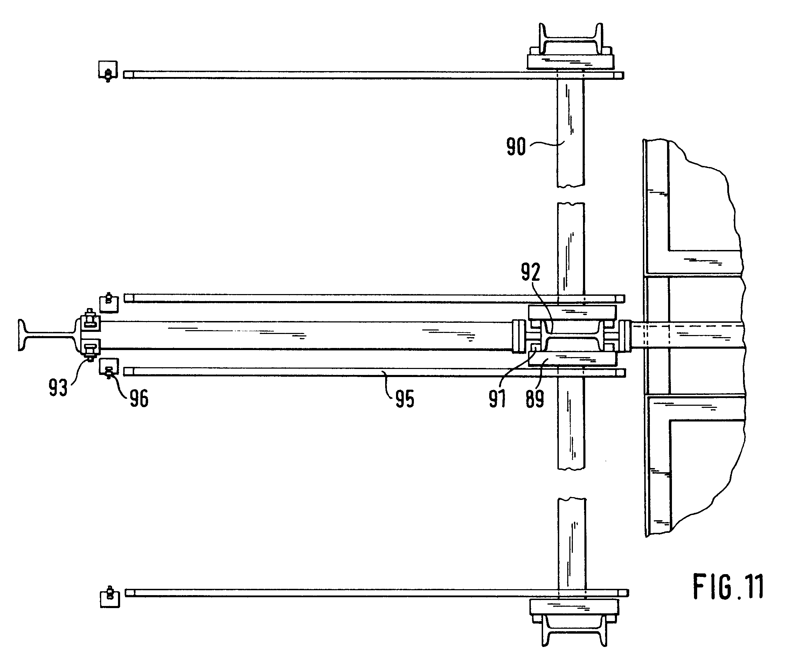

Die Fig. 10 und 11 zeigen in zwei Ansichten eine vorteilhafte Ausführungsform einer Fördereinrichtung 86. Zwei Führungskörper 89 sind über eine Träger 90 miteinander verbunden. Die Führungskörper 89 werden über Rollen 91 an einem senkrechten Träger 92 geführt und sind an umlaufenden Ketten 93 aufgehängt, wie in Fig. 8 angedeutet ist. Antriebe 94 bewegen die Fördereinrichtungen 86 auf und ab und ausfahrbare, in Führungen laufende Arme 95 sind ebenfalls mit einer umlaufenden Kette 96 verbunden. Allerdings ist es auch möglich, daß die Arme 95 bei stillgesetztem Antrieb 94 über einen getrennten Antrieb 97 hin und her, z.B. in die Position 95′, gefahren werden. Somit ist der Antrieb für die Fördereinrichtungen 86 auch von außen steuerbar, ohne daß Schleifleitungen benötigt werden. Mit den Armen 95 werden die Kassetten 56 bzw. 79 an ihren überstehenden Schienen 98 erfaßt und angehoben. Der Überstand der Schienen 98 geht aus der Darstellung gemäß Fig. 4 hervor.

Fig. 8 und 9 zeigen einen Speicherbereich 99, im unteren Teil die Weiteraerarbeitung aufnimmt. In der DE-A- 36 44 423 ist im einzelnen beschrieben, wie zwei zick-zackförmige Strukturen enthaltende Kassetten 100 und 101 übereinander fahrbar und aus diesen zick-zackförmige Speicherstrukturen 102 bzw. 103 entnehmbar sind und wie Druckprodukte aus einer Speicherstrucktur, z.B. 102 in die Druckprodukte in der anderen Speicherstruktur (z. B. 103) einsteckbar sind.

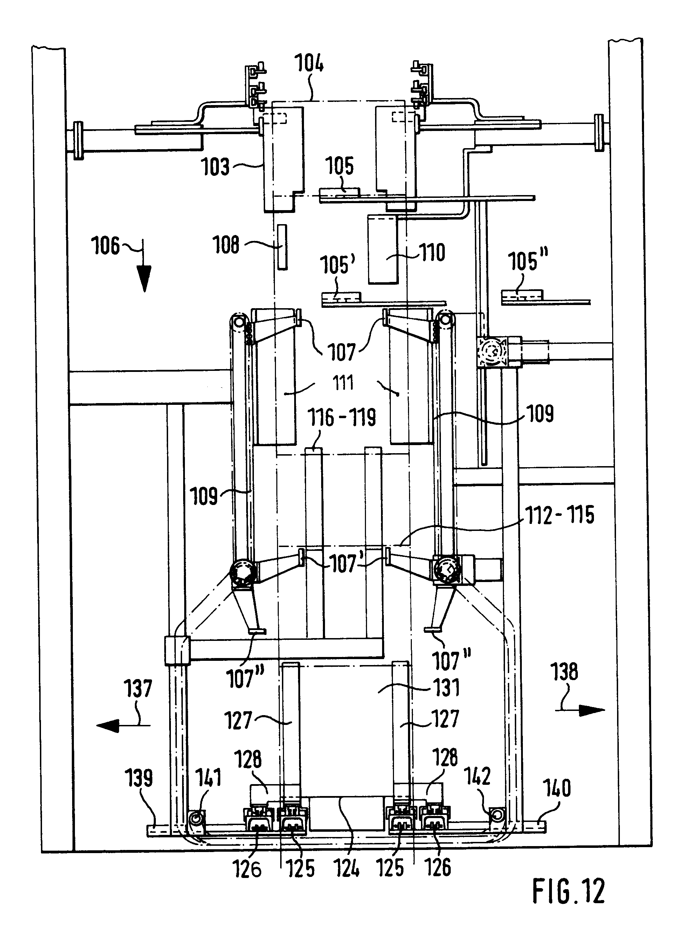

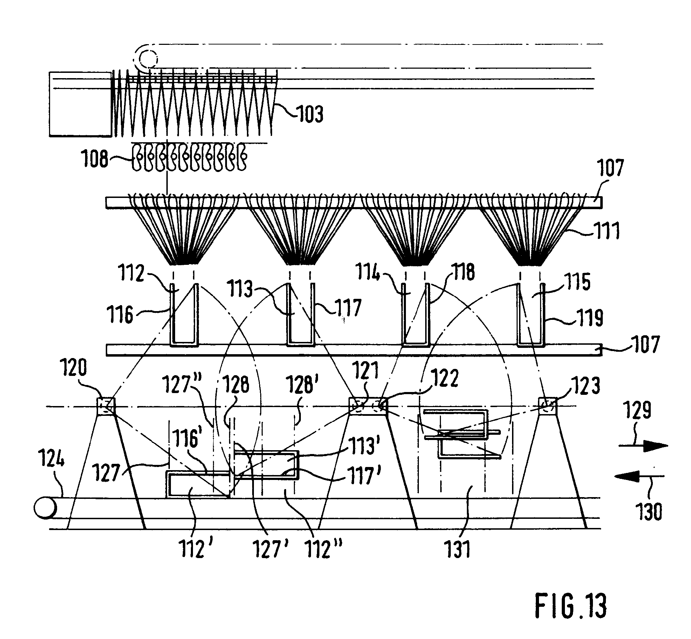

Die Fig. 12 und 13 zeigen in zwei Ansichten den in Fig. 8 angedeuteten Bereich 99. Komplettierte Druckprodukte 104 werden von einer Greiferleiste 105 erfaßt und in Pfeilrichtung 106 aus zick-zackförmigen auseinander- und zusarmenschiebbaren Speicherstrukturen herausgezogen und in die Position 105′ gebracht und auf Schienen 107 abgesetzt. Im einzelnen sind diese Vorgänge auch in der Patentanmeldung P 36 44 423 beschrieben und dargestellt. Während dieser Abwärtsbewegung kann jedes Drucexemplar einzeln mit Hilfe einer Adressiervorrichtung 108 in der in dieser Patentanmeldung beschriebenen Weise adressiert werden. Nachdem die Greiferleiste 105 in die Position 105″ gefahren wurde, bewegen sich an Ketten 109 aufgehängte Schienen 107 und somit gleichzeitig die auf ihnen abgesetzten Druckprodukte 104 weiter abwärts in Richtung eines Pfeiles 106. Die Druckexemplare 104 werden dabei von Zungen 110 und den Adressiervorrichtungen 108 gestützt. Durch die in Fig. 13 dargestellte besondere Form von Zungen 111 werden jeweils zehn Exemplare zu Teilstapeln 112 bis 115 zusammengefaßt, die von gabelförmigen Halterungen 116 bis 119 aufgenommen werden.

Die Schienen 107 schwenken über Positionen 107′ in Positionen 107″. Die Teilstapel 112 bis 119 können um Drehpunkte 120 bis 123 geschwenkt werden.

Der Teilstapel 112 wird zunächst in die Position 112′ geschwenkt und auf ein Förderband 124 abgelegt. Parallel zu diesem Förderband laufende Ketten 125 und 126 tragen senkrechte Zungen 127 bzw. 128.

Die Zungen 127 sind jeweils an den Ketten 125 befestigt, während die Zungen 128 mit den Ketten 126 verbunden sind. Die Zungen 127, 128 fahren nun durch eine Bewegung in Richtung der Pfeile 129 bzw. 130 gegeneinander an den Teilstapel 112′ heran. Dann bewegen sie sich über die Ketten 125 bzw. 126 gemeinsam mit dem Förderband 124 in Richtung des Pfeiles 129 und ziehen dabei den Teilstapel 112′ aus der Gabel 116′ in die Position 112″. Hier wird nun der Teilstapel 113 in die Position 113′ geschwenkt und dabei in entgegengesetzter Richtung auf den Teilstapel 112″ abgelegt, also kreuzgelegt.

Die Zungen 127 fahren dabei kurzzeitig von der Position 127′ in die Position 127″. Durch anschließende Bewegung der Zungen 127 und 128 sowie des Förderbandes 124 in Richtung des Pfeiles 130 wird wiederum der Teilstapel 113′ aus der Gabel 117′ herausgezogen. Diese Kreuzlegung geschieht im weiteren Verlauf gleichsinnig auch für die weiteren Teilstapel 114 und 115, so daß nach Abschluß der Kreuzlegung ein kreuzgelegtes Paket 131 mit z.B. vierzig Exemplaren entsteht. Der Vorgang des Kreuzlegens kann für jeden vierten Teilstapel gleichzeitig geschehen, also gemäß Fig. 9 für 24 Teilstapel gleichzeitig jeweils sechsmal. Dadurch wird eine hohe Arbeitsgeschwindigkeit erreicht. Gemäß einer vorteilhaften Ausführungsform nach Fig. 9 erhält man also sechs Stapel 131 bis 136 gleichzeitig, die an Ort und Stelle mit bekannten Vorrichtungen ggf. noch kreuzweise umreift werden können, bevor die Zungen 127 und 128 zusammen mit Ketten 125 und 126 seitlich in Richtung der Pfeile 137 und 138 wegbewegt werden, um die Stapel 131 bis 136 freizugeben (Fig. 12). Zu diesem Zweck sind die Führungen der Ketten 125 bzw. 126 mit Zahnstangen 139 und 140 verbunden, die mit Hilfe der Antriebe 141 bzw. 142 bewegt werden. Abschließend werden die Stapel 131 bis 136 in Richtung des Pfeiles 129 abtransportiert und möglichst unmittelbar einem Routenwagen, d.h. einem Transportfahrzeug, zugeführt.

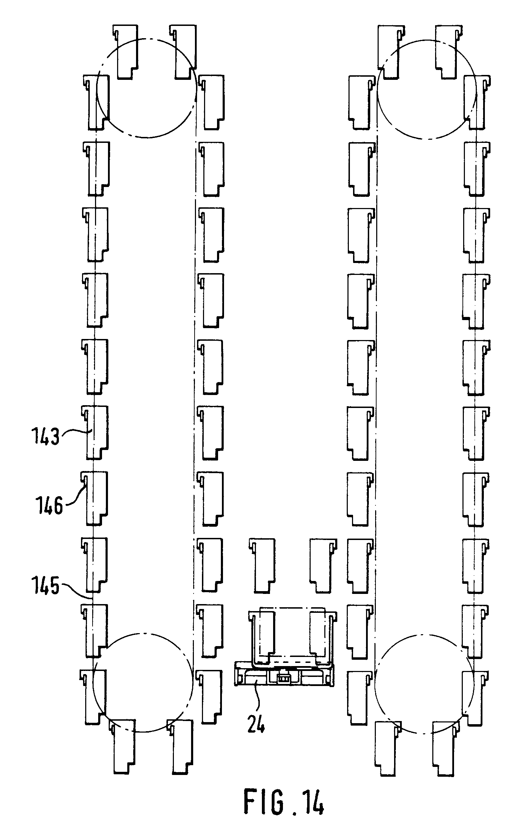

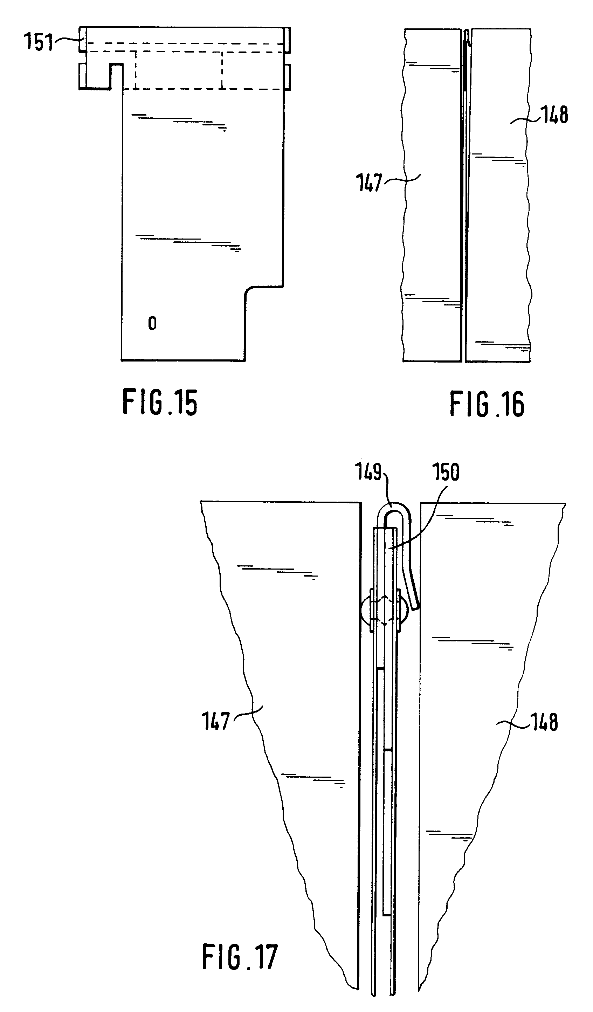

Um die Aufnahmekapazität der Speicherkassetten auch bei unterschiedlich dicken Produkten voll auszunutzen, ist es erforderlich, die Speicherstruktur in ihrer Länge der in den Kassetten abzuspeichernden Produktmenge anzupassen. Zu diesem Zweck werden gemäß einer weiteren erfinderischen Maßnahme die Speicherstrukturen 143 mit einer bestimmten Grundlänge gebildet, z.B. für jeweils 100 Exemplare. In einem einem Speicher nachgeschalteten endlos umlaufenden System 144, einem sogenannten Paternoster, gemäß Fig. 9, das aus endlosen umlaufenden Ketten 145 mit Querschienen 146 gebildet wird, können diese Speicherstrukturen 143 gesondert gespeichert werden. Die vorangehend beschriebene Transportbahn mit den Leerkassetten und den in ihnen enthaltenen leeren Speicherstrukturen wird bei Vorbeifahrt an dem Paternoster abgetastet und die Strukturmenge festgestellt, Fig. 14. Durch Entnahme aus dem System 144 wird die Speicherstrukturlänge pro Kassette vergrößert bzw. durch Abgabe an diesen verringert. Dies geschieht durch eine nicht näher gezeigte Greifvorrichtung. In den Fig. 15 bis 17 wird gezeigt, wie benachbarte Strukturblöcke 147 und 148 durch Verkrallung verbunden werden. Zu diesem Zweck sind an den Strukturen entsprechend geformte Bleche 149 bzw. 150 angenietet, deren Nasen 151 entsprechend überstehen, Fig. 15. Durch Erfassen dieser Nasen und Anheben des einen Speicherstrukturendes können die Strukturblöcke einfach gekoppelt oder entkoppelt werden. Das Verkoppeln geschieht dabei zweckmäßigerweise am Falzapparat nach der Entnahme aus den Kassetten, Fig. 2.

**Patentansprüche**

1. Vorrichtung zur Aufnahme, Speicherung und Weiterverarbeitung von Druckprodukten mit Transport- und Speichereinrichtungen, gekennzeichnet durch mehrere jeweils zu einer bestimmten von mehreren Ebenen (z.B. 31, Fig. 9) eines codierte Speicherfelder (80 bis 85) aufweisenden Speichers (Fig. 8, 9) mit wahlfreiem Zugriff führende Druckproduktaufnahmevorrichtungen in Behältern (29, 30) zum Transport von Drückprodukten,
durch Fördereinrichtungen (86), mit denen innerhalb des Speichers (Fig. 8, 9) mit den Druckproduktaufnahmevorrichtungen (29, 30) zugeführte Kassetten (z.B. 42 bis 44) zwischen den einzelnen parallelen horizontalen Ebenen der Speichereinrichtungen (Fig. 8, 9) transportierbar sind und
durch Transportvorrichtungen (87 bzw 88), mit denen die Kassetten (z.B. 42 bis 44) von einer vertikalen Speicherebene in eine andere überführbar sind.

2. Vorrichtung nach Anspruch 1, dadurch gekennzeichnet, daß unterhalb des Speichers (Fig. 8) eine Weiterverarbeitungsstation (z.B. 23) angeordnet ist, in der jeweils aus zwei übereinander liegenden Kassetten in zickzackförmigen Speicherstrukturen (102, 103) befindliche Druckprodukte individuell zusammenführbar und paketweise ablegbar sind.

3. Vorrichtung nach Anspruch 1, dadurch gekennzeichnet, daß die Fördereinrichtung (86, Fig. 10) einen querverschiebbaren Arm (95) aufweist, der über eine umlaufende Kette (89) anhebbar und absenkbar ist und daß Speicherkassetten (z. B. Fig. 3) auf dem Arm (95) mittels an den Kassetten vorgesehenen überstehenden Armen (Fig. 4, 98) gehalten werden.

4. Vorrichtung nach einem der vorangehenden Ansprüche, dadurch gekennzeichnet, daß im Speicher (Fig. 8) jeweils die Kassetten paarweise angeordnet sind und beidseitig Querförderer (88) und Längsförderer (87) vorgesehen sind, so daß ein Austausch von Kassetten zwischen den paarweise übereinander gestapelten Speichern vorgenommen werden kann.

5. Vorrichtung nach einem der vorangehenden Ansprüche, dadurch gekennzeichnet, daß jedem der hintereinander angeordneten Felder (80 bis 85, Fig. 9) eine größere Anzahl von Stapeleinrichtungen (131 bis 136) zugeordnet sind.

6. Vorrichtung zur Übernahme und zum Transport von Druckprodukten in kontinuierlicher Abfolge insbesondere nach Anspruch 1, dadurch gekennzeichnet, daß für mehrere Druckproduktabgabestellen (9 bis 13) zu einer Speicher- und Weiterverarbeitungsstation (19 bis 23) führende, in mehreren Transportebenen (31 bis 35) liegende, jeweils schleifenförmig verlaufende Transportbahnen (z.B. 24) vorgesehen sind, über die jeweils hintereinander mehrere unabhängig voneinander steuerbare Druckproduktaufnahmevorrichtungen (z.B. 28, 30) transportierbar sind und daß zu füllende Druckproduktaufnahmevorrichtungen (28, 30) von der jeweiligen Transportbahn (z.B. 24) einer Ebene (z.B. 31) zu der zugeordneten Druckproduktabgabestelle (z.B. 9) überführbar ist.

7. Vorrichtung nach Anspruch 6, dadurch gekennzeichnet, daß die Druckproduktaufnahmevorrichtungen (28, 30) jeweils mindestens aus einem Wagen (30) und einem elektromotorisch antreibbaren Triebkopf (28) bestehen und daß in dem Wagen (30) zick-zackförmige Speicherstrukturen (38, 39) beliebig zusammenstell-

EP 0 336 177 B1

barer Länge in zusammengeschobener Anordnung positionierbar sind.

8. Vorrichtung nach Anspruch 6 oder 7, gekennzeichnet durch eine Fördereinrichtung (45, 47) in Form einer Hub- oder Senkrechtfördereinrichtung zum Transport der Kassetten (42 bis 44 bzw. 48 bis 50) von einer Druckproduktabgabestelle (z.B. 9) in die zugeordnete Ebene (z.B. 31) und umgekehrt.

9. Vorrichtung nach einem der vorangehenden Ansprüche, dadurch gekennzeichnet, daß die Druckproduktabgabestellen (9 bis 13) Falzapparate einer mehrere Druckeinheiten (1 bis 8) umfassenden Druckmaschine (Fig. 1) sind und daß die Schienen (58) und Ketten (74) umfassenden Transportbahnen (z.B. 24) zur Aufnahme von Druckprodukten jeweils in Form einer Schleife (24, 26) um die Druckmaschine (Fig. 1) geführt sind.

10. Vorrichtung nach einem der vorangehenden Ansprüche 6 bis 9, dadurch gekennzeichnet, daß die Druckprodukte auf bzw. in den Wagen (30) jeweils in Kassetten (z.B. Fig. 3, 40 bis 44 und 48 bis 50) transportiert werden, wobei die Fördereinrichtung (47) diese jeweils aus der zugeordneten Ebene (z.B. 31 in Fig. 2) abgesenkt und in Aufnahmeposition (36, 37) gebracht werden, wonach sie durch einen weiteren Senkrechtförderer (45 in Fig. 3) wieder auf die zugeordnete Ebene (z.B. 31) anhebbar sind und daß in der Aufnahmeposition (36, 37) die Speicherstrukturen (38, 39) zwecks Aufnahme von Druckprodukten auseinanderziehbar sind.

11. Vorrichtung nach einem der vorangehenden Ansprüche 6 bis 10, dadurch gekennzeichnet, daß mit den Schienen (58) die Kette (74) fest verbunden ist und daß in die Kette (74) formschlüssig ein mit dem Antrieb (63 bis 69) des Triebkopfes (28) verbundenes Kettenrad (70) eingreift.

12. Vorrichtung nach einem der vorangehenden Ansprüche 6 bis 11, dadurch gekennzeichnet, daß der Triebkopf (28) über entlang der Schienen (58) verlaufenden Schleifleitungen antreibbar ist.

13. Vorrichtung zum Stapeln von packenweise zugeführten Druckprodukten auf einen Ausleger, insbesondere auf ein umlaufendes Auslegeband nach Anspruch 1, dadurch gekennzeichnet, daß jeweils nebeneinander zugeführte Druckprodukte (104) eines Teilstapels (112 bis 115) von unten mittels einer Greiferleiste (105) erfaßbar sind und durch Absenken der anschließend seitlich wegziehbaren Greiferleiste (105) auf beidseitig an Ketten (109) geführte Schienen (107) gebracht werden, bei deren Absenken (Pos. 107′) die Teilstapel (112 bis 115) zwischen gabelförmige Halterungen (116 bis 119) gebracht werden, und daß die gabelförmigen Halterungen (116 bis 119) jeweils paarweise (z.B. 116, 117) gegeneinander verschwenkbar sind, so daß jeweils die sich in diesen befindlichen Teilstapeln (z.B. 112, 113) auf ein Auslegeband (124) stapelweise übereinander gelegt werden.

14. Vorrichtung insbesondere nach Anspruch 13, dadurch gekennzeichnet, daß nach Ablage der Teilstapel (112, 113) auf dem Förderband (124) durch parallel zu diesem verlaufende an umlaufenden Ketten (125, 126) angeordnete Zungen (127, 128) die Teilstapel durch entgegengesetzte Bewegung der Zungen (127, 128) aus den Halterungen (116, 117) übereinander schiebbar sind (Kreuzlegung).

15. Vorrichtung nach Anspruch 13 oder 14, dadurch gekennzeichnet, daß nach Kreuzlegung eines ersten Teilstapelpaares (112, 113) dieses unter ein weiteres Teilstapelpaar (114, 115) führbar ist, wonach durch gegensinniges Verschwenken der nächsten beiden Halterungen (118, 119) auch dieses wiederum übereinander (kreuzweise) auf die sich bereits auf dem Förderband (124) befindlichen Stapel (112, 113) aufgelegt wird und daß anschließend durch gegensinnig bewegte Zungen (127, 128) auch die weiteren Teilstapel (114, 115) aus den Halterungen (118, 119) herausschiebbar sind.

16. Vorrichtung nach einem der vorangehenden Ansprüche 13 bis 15, dadurch gekennzeichnet, daß die Druckprodukte (104) beim Absenken der Greiferleiste (105) an einer Adressiervorrichtung (108) vorbeiführbar und einzeladressierbar sind.

17. Vorrichtung nach einem der vorangehenden Ansprüche 13 bis 16, dadurch gekennzeichnet, daß die Schienen (107) jeweils nach außen (Pos. 107′, 107″, Fig. 7) in der abgelenkten Position (Fig. 12) schwenkbar sind.

18. Vorrichtung insbesondere nach einem der vorangehenden Ansprüche, gekennzeichnet durch ein seitlich der heranfahrbaren Druckproduktaufnahmevorrichtungen (z.B. 29, 30) angeordnetes umlaufendes (Paternoster) System (144) dem Speicherstrukuren (z.B. 143) entnehmbar - und zuführbar sind, um eine vorbestimmte Länge einer Gesamt-Speicherstruktur (143) zusammenzustellen.

19. Vorrichtung nach Anspruch 18, dadurch gekennzeichnet, daß das System am Speicher (Fig. 9) angeordnet ist, und die Verbindung der einzelnen Speicherstrukturen (143) im Bereich der Druckproduktabgabestelle (z.B. 9 in Fig. 1) erfolgt.

20. Vorrichtung nach Anspruch 18 oder 19, dadurch gekennzeichnet, daß die Verbindung durch U-förmige Verkrallung (149, 150) zwischen zwei Speicherstrukturblöcken (147, 148) unter Anhebung einer Speicherstruktur (z.B. 147) erfolgt.

## Claims

1. Device for picking up, storing and further handling printed products with transportation and storage equipment, characterized by several printed-product pick-up devices, in each case leading to a certain one of several levels (e.g. 31, figure 9) of a store (figures 8, 9) having coded storage fields (80 to 85) with random access, in containers (29, 30) for the transportation of printed products,

by conveying equipment (86), with which, within the store (Figures 8, 9), cassettes (e.g. 42 to 44), supplied by the printed-product pick-up devices (29, 30), can be transported between the individual parallel horizontal levels of the storage equipment (Figures 8, 9) and

by transportation devices (87 and 88), with which the cassettes (e.g. 42 to 44) can be transferred from one vertical storage level into another.

2. Device according to claim 1, characterized in that underneath the store (Figure 8) there is arranged a further-handling station (e.g. 23), wherein printed products, in each case consisting of two cassettes lying on top of one another positioned in zigzag-shaped storage structures (102, 103), can be individually joined and deposited as a package.

3. Device according to claim 1, characterized in that the conveying equipment (86, Figure 10) has an arm (95) which can be displaced transversely and which can be lifted and lowered by means of a circulating chain (89), and in that storage cassettes (e.g. Figure 3) are held on the arm (95) by means of projecting arms (Figure 4, 98) provided on the cassettes.

4. Device according to one of the preceding claims, characterized in that the cassettes are in each case arranged in pairs in the store (Figure 8) and transverse conveyors (88) and longitudinal conveyors (87) are provided on both sides so that an exchange of cassettes can be undertaken between the stores stacked in pairs on top of one another.

5. Device according to one of the preceding claims, characterized in that a greater number of stacking devices (131 to 136) is associated with each of the fields (80 to 85, Figure 9) arranged in succession.

6. Device for the taking-over and for the transportation of printed products in continuous sequence in particular according to claim 1, characterized in that for several printed-product delivery points (9 to 13) transportation paths (e.g. 24) are provided, which lead to a storage and further-handling station (19 to 23), lie in several transportation levels (31 to 35) and extend in each case in the form of a loop, by means of which transportation paths several printed-product pick-up devices (e.g. 28, 30), controllable independently of one another, can be transported in each case in succession and in that printed-product pick-up devices (28, 30) to be filled can be transferred from the respective transportation path (e.g. 24) of a level (e.g. 31) to the associated printed-product delivery point (e.g. 9).

7. Device according to claim 6, characterized in that the printed-product pick-up devices (28, 30) comprise in each case at least a carriage (30) and a drive head (28), which can be driven by an electromotor, and in that zigzag-shaped storage structures (38, 39) which can be assembled in any length can be positioned in the carriage (30) in pushed-together arrangement.

8. Device according to claim 6 or 7, characterized by conveyor equipment (45, 47) in the form of lifting or vertical conveyor equipment for the transportation of the cassettes (42 to 44 or 48 to 50) from a printed-product delivery point (e.g. 9) into the associated level (e.g. 31) and vice versa.

9. Device according to one of the preceding claims, characterized in that the printed-product delivery points (9 to 13) are folding apparatuses of a printing machine (Figure 1) comprising several printing units (1 to 8) and in that the transportation paths (e.g. 24), comprising rails (58) and chains (74), to pick up printed products are guided in each case in the form of a loop (24, 26) about the printing machine (Figure 1).

10. Device according to one of the preceding claims 6 to 9, characterized in that the printed products are transported on to or into the carriage (30) in each case in cassettes (e.g. Figure 3, 40 to 44 and 48 to 50), wherein the conveyor equipment (47) lowers these in each case from the associated level (e.g. 31 in Figure 2) and brings them into the pick-up position (36, 37), after which they can be lifted again to the associated level (e.g. 31) by a further vertical conveyor (45 in Figure 3) and in that in the pick-up position (36, 37) the storage structures (38, 39) can be pulled apart for the purpose of picking up printed products.

11. Device according to one of the preceding claims 6 to 10, characterized in that the chain (74) is firmly connected to the rails (58) and in that a chain wheel (70), connected to the drive (63 to 69) of the drive head (28), engages in form-locking manner into the chain (74).

12. Device according to one of the preceding claims 6 to 11, characterized in that the drive head (28) can be driven via sliding lines extending along the rails (58).

13. Device for stacking printed products, supplied in packs, on to an arm, in particular on to a circulating delivery belt according to claim 1, characterized in that printed products (104) of a partial stack (112 to 115), in each case supplied next to one another, can be grasped from below by means of a gripper bar (105) and by lowering the gripper bar (105), which can subsequently be pulled away to the side, are brought on to rails (107) guided on both sides on chains (109), with the partial stacks (112 to 115) being brought between fork-shaped holders (116 to 119) when the rails are lowered (pos. 107'), and in that the fork-shaped holders (116 to 119) can be swung horizontally against one another in each case in pairs (e.g. 116, 117), so that in each case the partial stacks (e.g. 112, 113) located therein are placed on to a delivery belt (124) on top of one another in a stacked manner.

14. Device in particular according to claim 13, characterized in that after the deposit of the partial stacks (112, 113) on the conveyor belt (124), by means of tongues (127, 128), extending parallel to it and arranged on circulating chains (125, 126), the partial stacks can be pushed on top of one another out of the holders (116, 117) through the opposite movement of the tongues (127, 128) (cross-placing).

15. Device according to claim 13 or 14, characterized in that after the cross-placing of a first pair of partial stacks (112, 113) it can be guided underneath a further pair of partial stacks (114, 115), after which, through opposing horizontal swinging of the next two holders (118, 119), this in turn is placed one on top of the other (cross-wise) on to the stacks (112, 113) already located on the conveyor belt (124) and in that subsequently, through tongues (127, 128) moving in opposite directions, the further partial stacks (114, 115) can also be pushed out of the holders (118, 119).

16. Device according to one of the preceding claims 13 to 15, characterized in that the printed products (104) with the lowering of the gripper bar (105) can be guided past an addressing device (108) and can be addressed individually.

17. Device according to one of the preceding claims 13 to 16, characterized in that the rails (107) can be rotated in each case to the outside (pos. 107', 107", Figure 7) in the deflected position (Figure 12).

18. Device in particular according to one of the preceding claims, characterized by a circulating (Paternoster) system (144), arranged to the side of the advanceable printed-product pick-up devices (e.g. 29, 30), from and to which system storage structures (e.g. 143) can be removed and supplied, in order to assemble a predetermined length of a complete storage structure (143).

19. Device according to claim 18, characterized in that the system is arranged on the store (Figure 9), and the connection of the individual storage structures (143) takes place in the region of the printed-product delivery point (e.g. 9 in Figure 1).

20. Device according to claim 18 or 19, characterized in that the connection takes place through U-shaped claw means (149, 150) between two storage-structure blocks (147, 148) with the lifting of one storage structure (e.g. 147).

## Revendications

1. Dispositif pour la réception, le stockage et le traitement ultérieur de produits d'impression à l'aide de moyens de transport et de stockage,
caractérisé par plusieurs dispositifs récepteurs de produits d'impression, qui se trouvent dans des conteneurs (29,30) de transport de produits d'impression et mènent respectivement, par accès aléatoire, à l'un (31 par exemple, fig. 9) de plusieurs plans d'une unité de stockage (fig. 8,9) présentant des champs de stockage codés (80 à 85),
par des dispositifs convoyeurs (86), qui permettent de transporter des cassettes (42 à 44 par exemple), amenées dans l'unité de stockage (fig. 8,9) par les dispositifs récepteurs de produits d'impression (29,30), entre les différents plans horizontaux parallèles des dispositifs de stockage (fig. 8,9), et
par des dispositifs de transport (87 ou 88), qui permettent de transférer les cassettes (42 à 44 par exemple) d'un plan de stockage vertical dans un autre.

2. Dispositif selon la revendication 1, caractérisé en ce qu'un poste de traitement ultérieur (23 par exemple) est disposé en dessous de l'unité de stockage (fig. 8), poste dans lequel des produits d'impression respectifs, provenant de deux cassettes superposées et se trouvant dans des structures de stockage en zigzag (102, 103), peuvent être individuellement rassemblés et déposés par paquets.

3. Dispositif selon la revendication 1, caractérisé en ce que le dispositif convoyeur (86, fig. 10) présente un bras transversalement coulissant (95), qui peut être relevé et abaissé à l'aide d'une chaîne circulante (89), et en ce que des cassettes de stockage (fig. 3 par exemple) peuvent être maintenues sur le bras (95) à l'aide de bras en saillie (98, fig. 4) prévus sur les cassettes.

4. Dispositif selon l'une des revendications précédentes, caractérisé en ce que les cassettes sont disposées par paires dans l'unité de stockage (fig. 8), et des convoyeurs transversaux (88) et des convoyeurs longitudinaux (87) sont prévus des deux côtés, de sorte qu'on peut entreprendre un échange de cassettes entre les unités de stockage empilées par paires les unes au dessus des autres.

5. Dispositif selon l'une des revendications précédentes, caractérisé en ce qu'un nombre supérieur de dispositifs d'empilage (131 à 136) est associé à chacun des champs disposés les uns à la suite des autres (80 à 85, fig. 9).

6. Dispositif pour le transfert et le transport de produits d'impression en succession continue, notamment selon la revendication 1, caractérisé en ce que sont prévues, pour plusieurs points de remise de produits d'impression (9 à 13), des voies de transport (24 par exemple) s'étendant respectivement en boucle, menant à un poste de stockage et de traitement ultérieur (19 à 23) et se trouvant dans plusieurs plans de transport (31 à 35), voies qui permettent chacune de transporter les uns derrière les autres plusieurs dispositifs récepteurs de produits d'impression (28,30 par exemple) asservissables indépendamment les uns des autres, et en ce que les dispositifs récepteurs de produits d'impression (28,30) à remplir peuvent être transférés, par la voie de transport respective (24 par exemple) d'un plan (31 par exemple), au point associé de remise de produits d'impression (9 par exemple).

7. Dispositif selon la revendication 6, caractérisé en ce que les dispositifs récepteurs de produits d'impression (28, 30) sont chacun au moins constitués d'un wagon (30) et d'un véhicule moteur (28) pouvant être entraîné par moteur électrique, et en ce que des structures de stockage en zigzag (38,39), de longueur composée quelconque, peuvent être positionnées en emboîtement dans le wagon (30).

8. Dispositif selon la revendication 6 ou 7, caractérisé par un dispositif convoyeur (45,47) en forme d'élévateur ou de convoyeur vertical, pour transporter les cassettes (42 à 44 ou 48 à 50) d'un point de remise de produits d'impression (9 par exemple) dans le plan associé (31 par exemple), et vice-versa.

9. Dispositif selon l'une des revendications précédentes, caractérisé en ce que les points de remise de produits d'impression (9 à 13) sont des appareils de pliage d'une machine d'impression (fig. 1) comprenant plusieurs unités d'impression (1 à 8), et en ce que des voies de transport (24 par exemple), destinées à recevoir des produits d'impression et comprenant des rails (58) et des chaînes (74), sont respectivement guidées en forme de boucles (24,26) autour de la machine d'impression (fig. 1).

10. Dispositif selon l'une des revendications 6 à 9, caractérisé en ce que les produits d'impression sont transportés sur/dans les wagons respectifs (30) dans des cassettes (par exemple fig. 3, 40 à 44 et 48 à 50), le dispositif convoyeur (47) abaissant ces cassettes du plan associé (31 par exemple, fig. 2) pour les amener en position de réception (36, 37), à la suite de quoi elles peuvent être relevées par un autre convoyeur vertical (45, fig. 3) jusqu'au plan associé (31 par exemple), et en ce que, dans la position de réception (36,37), les structures de stockage (38, 39) peuvent être déployées afin de recevoir les 'produits d'impression.

11. Dispositif selon l'une des revendications 6 à 10, caractérisé en ce que la chaîne (74) est assemblée fixement aux rails (58), et en ce qu'une roue à chaîne (70), reliée à l'entraînement (63 à 69) du véhicule moteur (28), s'engage en liaison positive dans la chaîne (74).

12. Dispositif selon l'une des revendications 6 à 11, caractérisé en ce que le véhicule moteur (28) peut être entraîné par l'intermédiaire de lignes de contact s'étendant le long des rails (58).

13. Dispositif pour empiler des produits d'impression amenés par paquets sur un dispositif de sortie, notamment sur une bande transporteuse de sortie, selon la revendication 1, caractérisé en ce que des produits d'impression (104) d'une pile partielle (112 à 115), qui sont respectivement amenés juxtaposés, peuvent être saisis par le dessous au moyen d'une barre de préhension (105) et, par abaissement de la barre de préhension (105) qui peut ensuite être latéralement retirée, sont déposés sur des glissières (107) guidées de part et d'autre sur des chaînes (109), glissières lors de l'abaissement (pos. 107') desquelles les piles partielles (112 à 115) sont amenées entre des supports en étriers (116 à 119), et en ce que les supports en étriers (116 à 119) peuvent être pivotés les uns vers les autres par paires (116,117 par exemple), de sorte que les piles partielles (112,113 par exemple) qui se trouvent dans ces supports peuvent être déposées les unes au-dessus des autres, en piles, sur une bande transporteuse de sortie (124).

14. Dispositif selon la revendication 13, caractérisé en ce qu'à la suite de la dépose des piles partielles (112,113) sur la bande transporteuse (124), ces piles partielles peuvent, au moyen de languettes (127,128) disposées sur des chaînes circulantes (125,126) et s'étendant parallèlement à cette bande transporteuse, être sorties des supports (116,117) et poussées l'une au-dessus de l'autre (pose croisée), par un déplacement des languettes (127,128) en directions opposées.

15. Dispositif selon la revendication 13 ou 14, caractérisé en ce qu'à la suite de la pose croisée d'une première paire de piles partielles (112,113), cette première paire peut être amenée en dessous d'une autre paire de piles partielles (114,115), à la suite de quoi, par pivotement en directions opposées des deux supports suivants (118,119), cette autre paire peut être à son tour posée en superposition (pose croisée) sur les piles (112,113) qui se trouvent déjà sur la bande transporteuse (124), et en ce qu'ensuite, par le déplacement des languettes (127,128) en directions opposées, ces autres piles partielles (114,115) peuvent elles-aussi être poussées hors des supports (118,119).

16. Dispositif selon l'une des revendications 13 à 15, caractérisé en ce que les produits d'impression (104), lors de l'abaissement de la barre de préhension (105), peuvent passer devant un dispositif d'adressage (108), et être individuellement adressés.

17. Dispositif selon l'une des revendications 13 à 16, caractérisé en ce que les glissières (107) peuvent être respectivement pivotées vers l'extérieur (pos. 107', 107″, fig. 7) dans la position déviée (figure 12).

18. Dispositif selon l'une des revendications précédentes, caractérisé par un système circulant ou paternoster (144), qui est disposé sur le côté des dispositifs récepteurs de produits d'impression approchables (29,30 par exemple) et duquel/auquel peuvent être prélevées/amenées des structures de stockage (143 par exemple), afin de composer une structure de stockage globale (143) de longueur prédéterminée.

19. Dispositif selon la revendication 18, caractérisé en ce que le système est disposé sur l'unité de stockage (fig. 9), et l'assemblage des différentes structures de stockage (143) s'effectue dans la région du point de remise de produits d'impression (9 par exemple, fig. 1).

20. Dispositif selon la revendication 18 ou 19, caractérisé en ce que l'assemblage s'effectue par cramponnage en U (149,150) entre deux blocs de structures de stockage (147,148), avec soulèvement d'une structure de stockage (147 par exemple).

FIG.1

EP 0 336 177 B1

FIG.2

FIG.3

FIG.4

98

56

30

28

55

VI

14

FIG.5

FIG.6

FIG.7

FIG.8

FIG.9

FIG. 10

FIG.11

FIG.12

FIG.13

143

146

145

24

FIG.14

151

0

**FIG.15**

147

148

**FIG.16**

149   150

147

148

**FIG.17**